# EUROPÄISCHE PATENTANMELDUNG

(11) **EP 2 323 195 A1**
(43) Veröffentlichungstag der Anmeldung: **18.05.2011**
(21) Anmeldenummer: 10188208.2
(22) Anmeldetag: 20.10.2010
(51) Int. Cl.: H01M 2/10, B60L 11/18

(54) **Verfahren und Vorrichtung zum Austauschen einer Batterie in einem Fahrzeug**

(30) Priorität: 16.11.2009 DE 102009053050
(71) Anmelder: SIEMENS AKTIENGESELLSCHAFT, 80333 München (DE)
(72) Erfinder: Berdelle-Hilge, Peter, 78464, Konstanz (DE); Schererz, Holger, 15345, Rehfelde (DE); Voss, Frank, 12623, Berlin (DE)

(57) **Zusammenfassung**

Die Erfindung betrifft ein Verfahren und eine Vorrichtung zum Austauschen einer Batterie (5a) in einem Fahrzeug (6), insbesondere in einem Elektroauto. Die Batterie (5a) ist mittels mindestens eines mechanischen Befestigungselements und eines elektrischen Verbindungselemente mit dem Fahrzeug (6) verbunden. Das Fahrzeug wird in eine Relativposition zu einem unterhalb des Fahrzeugs (6) befindlichen Hubtisch (2) gebracht. Der Hubtisch (2) wird angehoben. Mindestens ein mit dem Hubtisch (2) verbundenes Bildaufnahmegerät (4a, 4b) erzeugt mindestens ein Fahrzeug-Abbild. Dieses mindestens eine Fahrzeug-Abbild zeigt die Batterie (5a) im Fahrzeug (6) vor dem Ausbau. Durch Auswertung des mindestens einen Fahrzeug-Abbilds wird für jedes Befestigungselement und jedes Verbindungselement jeweils eine Gut-oder-Schlecht-Entscheidung über den aktuellen Zustand des Elements getroffen. In einer Ausgestaltung wird das Fahrzeug-Abbild auf einem Bildschirmgerät (10) dargestellt, und eine Eingabe eines Benutzers betreffend dieses Fahrzeug-Abbild wird erfasst.

## Beschreibung

Die Erfindung betrifft ein Verfahren und eine Vorrichtung zum Austauschen einer Batterie in einem Fahrzeug, insbesondere in einem Elektroauto.

In WO 2009/039454 A1 wird ein Verfahren beschrieben, um die Batterien von Elektrofahrzeugen aufzuladen. Der aktuelle Status einer Batterie in einem Fahrzeug wird ermittelt. Weiterhin wird ermittelt, wo sich das Fahrzeug aktuell befindet. Falls die Batterie aufgeladen oder ersetzt werden muss, so wird einen Fahrer des Fahrzeugs eine jetzt noch erreichbare Aufladestation angezeigt. In einer Ausgestaltung wird die wenigstens teilweise entladene Batterie nicht im Fahrzeug aufgeladen, sondern ausgebaut und durch eine neue, bereits aufgeladene Batterie ersetzt.

Der Erfindung liegt die Aufgabe zugrunde, ein Verfahren mit und eine Vorrichtung bereitzustellen, die ein rasches Austauschen einer Batterie in einem Fahrzeug ermöglichen.

Die Aufgabe wird durch ein Verfahren mit den Merkmalen des Anspruchs 1 und eine Vorrichtung mit den Merkmalen des Anspruchs 7 gelöst. Vorteilhafte Ausgestaltungen sind in den Unteransprüchen angegeben.

Der Austausch der Batterie durch eine Bewegung nach unten ist der schnellste Weg, die alte Batterie aus dem Fahrzeug zu holen und eine neue Batterie einzubauen.

Lösungsgemäß wird mindestens ein Fahrzeug-Abbild ausgewertet. Hierbei wird jedes mechanische Befestigungselement und jedes elektrische Verbindungselement überprüft. Für jedes Befestigungselement und jedes Verbindungselement wird eine Entscheidung getroffen, ob das Element intakt oder defekt ist. Weil zunächst diese Entscheidung für jedes Element getroffen wird, wird verhindert, dass mit dem Ausbau der Batterie begonnen wird, obwohl ein Befestigungselement oder ein Verbindungselement defekt ist. Dadurch werden unnütze Verzögerungen im Ablauf verhindert. Vielmehr wird zunächst eine Entscheidung getroffen, ob sich die Batterie ohne weitere Schritte ausbauen lässt oder nicht.

In einer Ausgestaltung wird das mindestens eine Fahrzeug-Abbild an eine Bildauswerteeinheit übermittelt, welche das Fahrzeug-Abbild automatisch auswertet und automatisch jede Gut-oder-Schlecht-Entscheidung fällt. Diese Ausgestaltung spart aufgrund der bewirkten Automatisierung Zeit ein.

In einer anderen Ausgestaltung wird das mindestens eine Fahrzeug-Abbild an einen Bildschirmarbeitsplatz übermittelt und dort auf ein Bildschirmgerät dargestellt. Ein Bearbeiter prüft das dargestellte Fahrzeug-Abbild und nimmt pro Befestigungselement und pro Verbindungselement jeweils eine Eingabe vor. Die jeweils eine Eingabe wird erfasst und ausgewertet. Möglich ist auch, dass ein Bearbeiter für das gesamte Fahrzeug-Abbild eine einzige gesamte Gut-oder-Schlecht-Entscheidung vornimmt und eine entsprechende Eingabe eingibt. Diese eine erfasste Entscheidung gilt dann für jedes Element.

Diese Ausgestaltung ermöglicht es einem Bearbeiter, z. B. einem Mechaniker, die auszubauende Batterie zu untersuchen, ohne vor Ort sein zu müssen. Ein Mechaniker kann dadurch zeitlich überlappend mehrere Batteriewechselstationen überwachen oder diese Stationen nacheinander überwachen und spart dadurch Reisezeiten ein. Der Mechaniker kann in einer ergonomischeren Position als unter einem Fahrzeug arbeiten und in einer angenehmeren Umgebung sein.

Möglich ist auch eine Mischform: Zunächst versucht die Bildauswerteeinheit automatisch, für jedes Verbindungselement und jedes Befestigungselement eine Entscheidung zu fällen. Gelingt dies der Bildauswerteeinheit für mindestens ein Element nicht, so wird das mindestens eine Fahrzeug-Abbild an den Bildschirmarbeitsplatz übermittelt und dort dargestellt. Vorzugsweise berechnet die Bildauswerteeinheit jeweils ein Sicherheitsmaß für jede Gut-oder-Schlecht-Entscheidung. Liegt dieses Sicherheitsmaß unter einer vorgegebenen Schranke, so wird das Fahrzeug-Abbild an den Bildschirmarbeitsplatz übermittelt.

Möglich ist auch, dass das mindestens eine Fahrzeug-Abbild dann an den Bildschirmarbeitsplatz übermittelt und auf dem Bildschirmgerät dargestellt wird, wenn die Bildauswerteeinheit für mindestens ein Element eine Schlecht-Entscheidung oder eine Entscheidung mit einem Sicherheitsmaß kleiner als die Schranke gefällt hat. Ansonsten wird die automatisch und mit ausreichender Sicherheit getroffene Entscheidung verwendet.

Im Folgenden wird die Erfindung anhand eines Ausführungsbeispiels beschrieben. Dabei zeigen:
- Fig. 1: schematisch die Batteriewechselstation des Ausfüh- rungsbeispiels in Seitenansicht;
- Fig. 2: den ersten Schritt einer Abfolge, wobei sich im ers- ten Schritt die alte Batterie noch im Fahrzeug und der Hubtisch unter der alten Batterie befindet;
- Fig. 3: den nächsten Schritt der Abfolge, wobei der Hubtisch die alte Batterie abgesenkt hat;
- Fig. 4: den nächsten Schritt der Abfolge, wobei der Hubtisch mit der alten, ausgebauten Batterie seitlich wegbe- wegt wurde und
- Fig. 5: den nächsten Schritt der Abfolge, wobei der Hubtisch die ausgebaute Batterie wieder angehoben hat.

Im Ausführungsbeispiel wird die Erfindung eingesetzt, um vollautomatisiert eine Batterie auszutauschen, welche in ein Straßenfahrzeug eingebaut ist. Dieses Straßenfahrzeug hat im Ausführungsbeispiel einen elektrischen Antrieb. In einer Ausgestaltung wird die entladene oder defekte Batterie ausgetauscht, wenn sie entladen ist, und durch eine aufgeladene Batterie ersetzt. Diese Ausgestaltung hat den Vorteil, dass das Fahrzeug zur Verfügung steht, während die entladene Batterie wieder aufgeladen wird. In einer anderen Ausgestaltung wird die Batterie ersetzt, weil die alte Batterie defekt ist.

Im Folgenden wird die entladene oder defekte Batterie als die "alte Batterie" bezeichnet und die aufgeladene und intakte Batterie als die "neue Batterie".

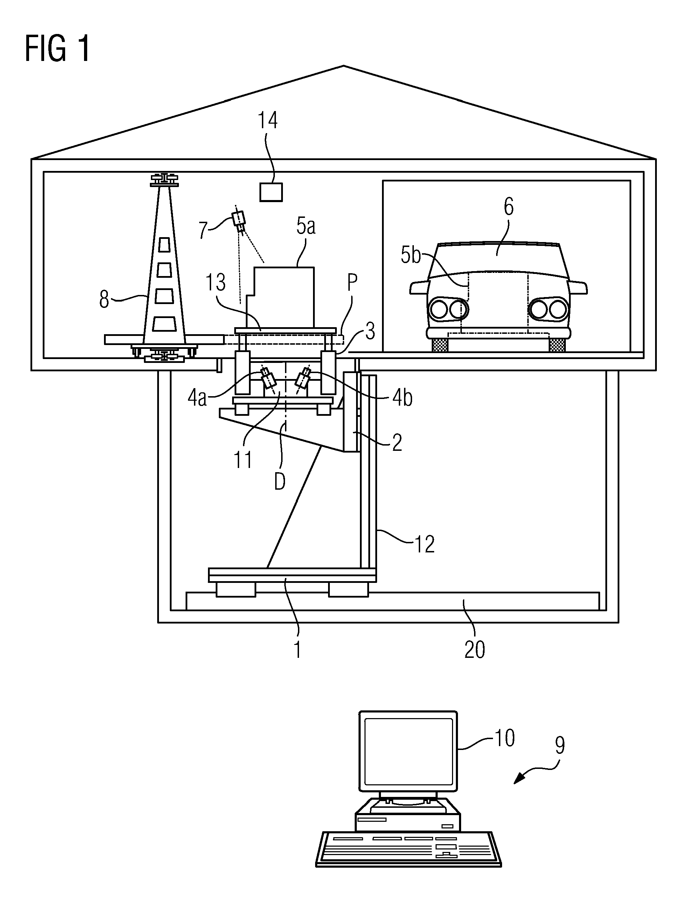

Fig. 1 zeigt die Batteriewechselstation des Ausführungsbeispiels. Dargestellt sind
- ein Hubtisch 2 mit einer Auflagefläche 13,
- eine Haltevorrichtung 1 für den Hubtisch 2,
- wobei die Haltevorrichtung 1 auf einer Führungseinrichtung 20 horizontal verschiebbar ist,
- ein Auflagefläche-Stellantrieb 3, der die Auflagefläche 13 relativ zum Rest des Hubtischs 2 auf und ab zu bewegen vermag,
- ein Hubtisch-Stellantrieb 12, der den Hubtisch 2 relativ zur Haltevorrichtung 1 auf und ab zu bewegen vermag,
- eine Fördereinrichtung 8 für jeweils eine Batterie, die bis in eine Position P unter die Auflagefläche 13 zu fahren vermag,
- zwei Kameras 4a, 4b, die mechanisch mit dem Hubtisch 2 verbunden sind und mitsamt dem Hubtisch 2 auf und ab bewegt werden,
- eine ortsfest montierte Kamera 7,
- ein Regler 11 für den Hubtisch 2,
- eine Bildauswerteeinheit 14.

Die Bildauswerteeinheit 14 ist durch Datenverbindungen mit den Kameras 4a, 4b, 7 und mit dem Regler 11 verbunden.

In Fig. 1 ist weiterhin ein Fahrzeug 6 mit einer alten Batterie 5a zu sehen. Entfernt von der Batteriewechselstation befindet sich ein Bildschirmarbeitsplatz 9 mit einem Bildschirmgerät 10. Der Bildschirmarbeitsplatz 9 ist durch Datenverbindungen mit den Kameras 4a, 4b, 7 der Bildauswerteeinheit 14 und mit dem Regler 11 verbunden.

Die entladene Batterie 5a wird von unten aus dem Fahrzeug 6 entnommen, und die neue Batterie wird von unten eingeschoben. Möglich ist es, das Fahrzeug 6 hierfür anzuheben. Vorzugsweise wird das Fahrzeug 6 aber über einen nach oben offenen Raum positioniert, der sich unterhalb eines Bodens erstreckt.

Ein Hubtisch 2 mit Wechsel-Werkzeugen fährt von unten unter die Batterie. Die Wechsel-Werkzeuge lösen die Batterie 5a aus ihrer Halterung im Fahrzeug 6. Der Hubtisch 2 wird abgesenkt und nimmt die alte Batterie 5a nach unten aus dem Fahrzeug 6 mit. Eine Fördereinrichtung 8 transportiert die alte Batterie 5a ab. Diese Fördereinrichtung 8 befindet sich in dem offenen Raum unter dem Fahrzeug 6 oder neben dem Fahrzeug 6. Anschließend transportiert die Fördereinrichtung 8 eine neue Batterie zum Hubtisch 2. Der Hubtisch 2 hebt die neue Batterie an, bis die neue Batterie die richtige Position im Fahrzeug 6 erreicht hat. Die Wechsel-Werkzeuge befestigen die neue Batterie an ihrem Platz im Fahrzeug 6.

Diese Schritte sollen automatisiert durchgeführt werden. Damit dies ermöglicht wird, lässt sich der Hubtisch 2 linear senkrecht und relativ zur Haltevorrichtung 1 auf- und abbewegen. Die Auflagefläche 13 lässt sich relativ zum übrigen Hubtisch 2 auf- und abbewegen. In einer Ausgestaltung lässt sich der Hubtisch 2 linear in alle drei Richtungen eines kartesischen Koordinatensystems bewegen. Außerdem lässt sich der Hubtisch 2 in einer Ausgestaltung um wenigstens eine senkrechte Drehachse D drehen. Der Hubtisch 2 besitzt entsprechende Stellantriebe 3, 12.

Die Wechsel-Werkzeuge sind mit dem Hubtisch 2 mechanisch verbunden und werden mitsamt dem Hubtisch 2 verschoben. Möglich ist auch, dass ein Wechsel-Werkzeug sich mittels eines Werkzeug-Stellantriebs auch relativ zum Hubtisch 2 verschieben lässt, insbesondere um eine Drehachse drehen und/oder linear bewegen lässt. In einer Ausgestaltung lässt sich mindestens ein Wechsel-Werkzeug innerhalb eines Bereichs in jede Relativposition relativ zum Hubtisch 2 verbringen. Der Hubtisch 2 besitzt entsprechende Stellantriebe zum Bewegen eines Wechselwerkzeugs relativ zum Hubtisch 2.

Die lösungsgemäße Vorrichtung besitzt eine Sensorik und einen Regler 11.

Der Regler 11 verarbeitet Messwerte von der Sensorik und steuert die Stellantriebe 3, 12 des Hubtischs 2 und der Wechsel-Werkzeuge an.

Die Sensorik umfasst mindestens eine Hubtisch-Kamera 4a, 4b, einen Abstandssensor und eine Bildauswerteeinheit 14. Die mindestens eine Hubtisch-Kamera 4a, 4b ist fest mit dem Hubtisch 2 verbunden und wird mit dem Hubtisch 2 mitbewegt. Jede Hubtisch-Kamera 4a, 4b erzeugt Abbilder in eine Betrachtungsrichtung senkrecht oder schräg nach oben.

In einer Ausgestaltung besitzt der Hubtisch 2 mehrere Hubtisch-Kameras 4a, 4b. Diese mehreren Kameras 4a, 4b erzeugen Abbilder aus verschiedenen Betrachtungsrichtungen.

Möglich ist auch, dass eine weitere Kamera vorhanden ist, die ortsfest montiert ist. In Fig. 1 wird eine solche ortsfeste Kamera 7 gezeigt.

Falls ein Wechsel-Werkzeug sich relativ zum Hubtisch 2 bewegen lässt, so umfasst die Sensorik vorzugsweise außerdem eine Werkzeug-Kamera, die mit dem Wechsel-Werkzeug verbunden ist und mit dem Wechsel-Werkzeug relativ zum Hubtisch 2 bewegt wird.

Vorzugsweise besitzt die Sensorik weiterhin mindestens einen Abstandssensor. Dieser Abstandssensor vermag den Abstand zwischen dem Hubtisch 2 oder einem Wechsel-Werkzeug am Hubtisch 2 zum Fahrzeug 6 zu messen.

Zunächst wird das Fahrzeug 6 in eine bestimmte Start-Position oberhalb des Hubtischs 2 positioniert. Diesen Schritt kann ein Fahrer durchführen, der das Fahrzeug 6 in die Start-Position verbringt.

Der Hubtisch 2 wird anschließend in eine bestimmte Position relativ zur noch eingebauten alten Batterie 5a bewegt. Zu diesem Zweck wird ein markantes, von unten optisch erkennbares Referenzelement des Fahrzeugs 6 oder der alten Batterie 5a vorgegeben und verwendet. Dieses Referenzelement kennzeichnet die Position der Batterie 5a innerhalb des Fahrzeugs 6.

Das Referenzelement ist z. B. eine optisch erfassbare Kennung für die alte Batterie 5a, welche diese Batterie 5a von allen anderen Batterien unterscheidet, die im Einzugsgebiet der Batteriewechselstation in Fahrzeugen verwendet werden. Die Kennung ist z. B. codiert in Form eines Strichmusters ("Barcode") und/oder im Klartext auf der Batterie 5a angebracht.

Mindestens einmal wird folgende Abfolge durchgeführt:
- Mindestens eine Hubtisch-Kamera 4a, 4b erzeugt mindestens ein Fahrzeug-Abbild von unten in einer Abbildungsrichtung senkrecht oder schräg nach oben.
- Die Bildauswerteeinheit 14 wertet das mindestens eine Fahrzeug-Abbild aus und sucht im Fahrzeug-Abbild nach einem Abbild des Referenzelements. Hierfür vergleicht die Bildauswerteeinheit 14 entweder das Referenzelement-Abbild mit einer elektronischen Bibliothek von Abbildern. Oder die Bildauswerteeinheit 14 wertet das Fahrzeug-Abbild durch Anwendung vorgegebener Regeln aus.
- Falls der Hubtisch 2 bereits die korrekte vorgegebene Position relativ zum Referenzelement aufweist, so befindet sich das Abbild des Referenzelements an einer bestimmten Position im Fahrzeug-Abbild. "Korrekt" heißt: Die Abweichung der Ist-Relativposition von der Soll-Relativposition liegt in einer vorgegebenen Toleranz. Diese Toleranz hängt vom Aktionsradius des Wechsel-Werkzeugs zu dem Hubtisch ab. Je größer dieser Aktionsradius ist, desto größer ist auch die Toleranz. Ob der Hubtisch 2 die korrekte vorgegebene Relativposition aufweist, überprüft die Bildauswerteeinheit 14 automatisch.
- Ansonsten ermittelt die Bildauswerteeinheit 14 die Ist-Position sowie die Abweichung der Ist-Position von der Soll-Position (Abstand, Richtung) des Referenzelement-Abbilds im Fahrzeug-Abbild und übermittelt die Abweichung an den Regler 11.
- Der Regler 11 berechnet aus der übermittelten Abweichung Stellbefehle für die Stellantriebe 3, 12 des Hubtischs 2.
- Diese Stellbefehle werden an die Stellantriebe 3, 12 übermittelt.
- Die Stellantriebe 3, 12 bewegen den Hubtisch 2 und/oder die Auflagefläche 13 entsprechend der übermittelten Stellbefehle.
- Die Abfolge wird erneut einmal durchgeführt.

In dieser Ausgestaltung wird also der Hubtisch 2 relativ zum Fahrzeug 6 bewegt, und zwar gedreht und/oder linear in eine Richtung bewegt, die eine horizontale Richtungskomponente aufweist. Der Hubtisch 2 wird also nicht nur angehoben, sondern auch seitlich bewegt.

In einer alternativen Ausgestaltung brauchen der Hubtisch 2 und/oder die Auflagefläche 13 nur jeweils einen Stellantrieb aufzuweisen, der den Hubtisch 2 auf- und abzubewegen vermag. Dafür lässt sich das Fahrzeug 6 in einer waagerechten Ebene bewegen, beispielsweise mit Hilfe einer Hebebühne oder eines Schlittens, die bzw. der einen Stellantrieb aufweist. Der Regler 11 übermittelt seine Stellbefehle an diesen Antrieb, und das Fahrzeug 6 wird entsprechend der Stellbefehle in eine waagerechte Richtung bewegt.

Möglich ist, dass sich das Fahrzeug 6 bereits dann, wenn es in die Start-Position verbracht wurde, an der korrekten Position relativ zum Hubtisch 2 befindet, d. h. die Ist-Relativposition um nicht mehr als die Toleranz von der Soll-Relativposition abweicht. Dies wird durch Auswertung des Fahrzeug-Abbilds überprüft, und zwar von der Bildauswerteeinheit 14. In diesem Falle brauchen weder das Fahrzeug 6 noch der Hubtisch 2 in eine waagerechte Richtung bewegt oder gedreht zu werden.

Nach Durchführung dieser Abfolge oder dieser Abfolgen befindet sich der Hubtisch 2 an einer vorgegebenen Soll-Relativposition relativ zum Fahrzeug 6 und unterhalb des Fahrzeugs 6.

Die Stellantriebe 3, 12 bewegen den Hubtisch 2 senkrecht nach oben und bewegen die Auflagefläche 13 relativ zum Hubtisch 2. Der mindestens eine Abstandssensor misst den Abstand des Hubtisches 2 mit den Wechsel-Werkzeugen relativ zum Fahrzeug 6.

Unterschreitet dieser gemessene Abstand eine vorgegebene Schranke, so wird der Hubtisch 2 gestoppt, um Beschädigungen am Hubtisch 2 oder am Fahrzeug 6 zu vermeiden.

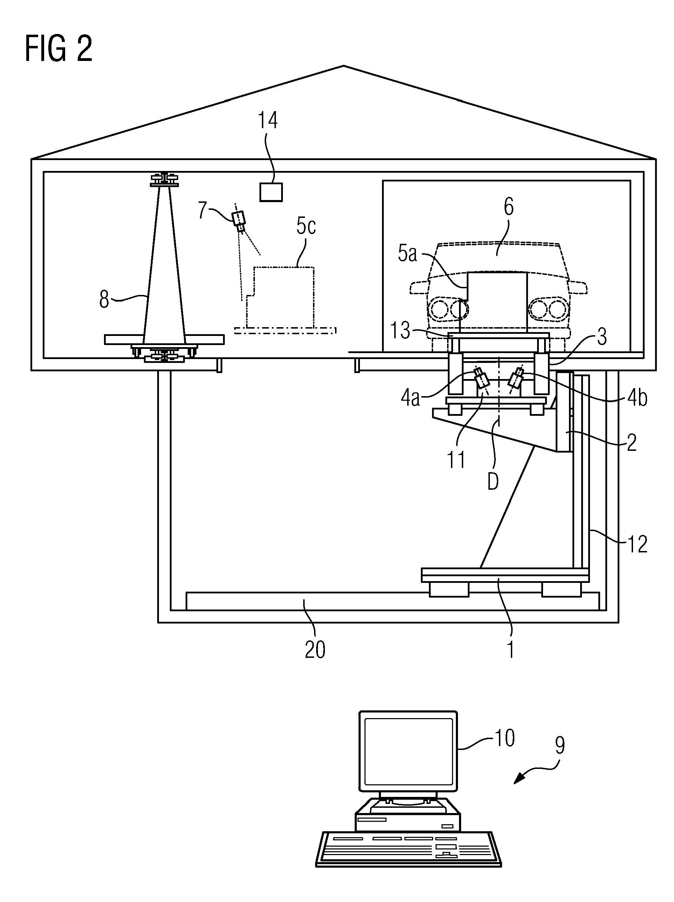

Fig. 2 zeigt die Situation, dass sich die alte Batterie 5a noch im Fahrzeug 6 befindet und der Hubtisch 2 bis unterhalb der alten Batterie 5a angehoben ist. Die alte Batterie 5a ruht bereits auf der Auflagefläche 13. Die Wechsel-Werkzeuge können nunmehr die Befestigungselemente lösen.

Möglich ist, dass folgende beiden Abläufe zeitlich überlappend durchgeführt werden:
- Der Hubtisch 2 oder das Fahrzeug 6 werden bewegt, um die vorgegebene Ist-Relativposition herzustellen.
- Der Hubtisch 2 wird angehoben, also in vertikale Richtung nach oben bewegt.

Nunmehr sind die Wechsel-Werkzeuge an dem Hubtisch 2 in eine Position gebracht worden, in der die Wechsel-Werkzeuge auf die alte Batterie 5a von unten zugreifen können, um die alte Batterie 5a aus dem Fahrzeug 6 zu entfernen.

Die alte Batterie 5a ist mittels mindestens einem, vorzugsweise mehreren mechanischen Befestigungselementen am Fahrzeug 6 befestigt. Ein solches Befestigungselement ist z. B. als Bajonett-Verschraubung ausgestaltet. Außerdem ist die alte Batterie 5a durch mehrere elektrische Verbindungselemente mit dem übrigen Fahrzeug 6 verbunden.

In einer Ausführungsform wird zunächst überprüft, ob die alte Batterie 5a automatisch und ohne zusätzliche Schritte durch eine neue Batterie ersetzt werden kann oder ob dieser Schritt nicht durchgeführt werden kann, weil der aktuelle Zustand der Befestigungselemente dies nicht ermöglicht, z. B. weil die Befestigungselemente mechanisch beschädigt oder korrodiert sind oder die Wechsel-Werkzeuge nicht an ein Befestigungselement heran kommen, weil ein anderes Element des Fahrzeugs 6 oder Verschmutzungen den sicheren Zugriff versperren. Möglich ist auch, dass ein elektrisches Verbindungselement verschmutzt oder korrodiert oder mechanisch beschädigt ist. Auch in diesem Falle lässt sich die alte Batterie 5a nicht ohne weitere Schritte ausbauen, z. B. weil Beschädigungen durch einen Kurzschluss zu vermeiden sind.

Um dies zu überprüfen, wird ein weiteres Abbild der alten Batterie 5a, die noch im Fahrzeug 6 befestigt ist, und der Befestigungselemente erzeugt, und zwar von einer Kamera 4a, 4b des positionierten Hubtisches 2. Dieses Batterie-Abbild wird an die Bildauswerteeinheit 14 übermittelt. Die Bildauswerteeinheit 14 sucht im Abbild nach den Befestigungselementen, z. B. indem die Bildauswerteeinheit 14 eine elektronische Bibliothek mit Referenzbildern von Befestigungselementen durchsucht oder vorgegebene Regeln anwendet. Die Bildauswerteeinheit 14 bewertet die Abbilder von den Befestigungselementen aus und trifft automatisch eine Entscheidung, ob sich die Batterie lösen lässt.

In einer Ausgestaltung wird im Fahrzeug-Abbild die optisch erfassbare Kennung der alten Batterie 5a entziffert, z. B. indem das Strichmuster gelesen und decodiert wird. Ein Entscheidungsrechner der Batteriewechselstation ist mit einer zentralen Datenbank für Batterien verbunden. In dieser zentralen Datenbank ist für jede verwendete Batterie jeweils Datensatz abgelegt. Dieser Datensatz enthält die Batterie-Kennung und Angaben zum Herstellungsdatum und Angaben dazu, an welchen Zeitpunkten die Batterie 5a bereits aufgeladen und an welchen Zeitpunkten sie gereinigt oder repariert wurde. Der Entscheidungsrechner richtet eine Abfrage an einen Server dieser zentralen Datenbank. Die Abfrage umfasst die Batterie-Kennung. Als Antwort auf diese Abfrage liefert der Datenbank-Server das Herstellungsdatum und die Zeitpunkte des Aufladens, des Reinigens und der Reparatur der alten Batterie 5a. Der Entscheidungsrechner wertet die Antwort aus und trifft automatisch eine Entscheidung, ob die Befestigungselemente und Verbindungselemente bereits deshalb manuell überprüft werden müssen, weil die alte Batterie 5a überhaupt schon lange verwendet wurde oder weil sie schon lange in demselben Fahrzeug verwendet wurde. Die Entscheidung der Bildauswerteeinheit 14 oder des Entscheidungsrechners ist in einer Ausgestaltung mit einem Sicherheitsmaß verbunden. Die Bildauswerteeinheit 14 berechnet dieses Sicherheitsmaß. Ist das Sicherheitsmaß kleiner als eine vorgegebene Sicherheitsschranke, so folgert die Bildauswerteeinheit 14 automatisch, dass eine Entscheidung nicht automatisch gefällt werden kann.

Das mindestens eine -Fahrzeug-Abbild des Fahrzeugs 6 mit der noch eingebauten Batterie 5a wird an einen Bildschirmarbeitsplatz 9 übermittelt und auf einem Bildschirmgerät 10 des Bildschirmarbeitsplatzes 9 dargestellt. Der Bildschirmarbeitsplatz 9 besitzt eine Datenverarbeitungsanlage, zu der das Bildschirmgerät 10 sowie geeignete Eingabegeräte und Betätigungselemente gehören.

Dieser Bildschirmarbeitsplatz 9 ist vorzugsweise ergonomisch eingerichtet und befindet sich außerhalb des Raums unter dem Fahrzeug 6. In einer Ausgestaltung befindet sich der Bildschirmarbeitsplatz 9 an einem anderen Ort als die Batteriewechselstation mit dem offenen Raum. Möglich ist, dass mehrere Batteriewechselstationen mit demselben Bildschirmarbeitsplatz 9 verbunden sind.

Ein Bearbeiter, z. B. ein Mechaniker, analysiert das mindestens eine Fahrzeug-Abbild. Dieser Bearbeiter überwacht in einer Ausgestaltung mehrere Batteriewechselstationen.

Der Bearbeiter trifft eine Entscheidung, bevorzugt zwischen einer der folgenden Alternativen:
- Die alte Batterie 5a lässt sich automatisch von den vorhandenen Wechsel-Werkzeugen ausbauen.
- Die alte Batterie 5a lässt sich nur manuell ausbauen.

In einer Ausgestaltung entscheidet der Mechaniker zusätzlich, ob ein weiteres Wechsel-Werkzeug zur Batteriewechselstation gebracht werden muss.

Diese Entscheidung gibt der Mechaniker in ein geeignetes Eingabegerät ein. Die Datenverarbeitungsanlage des Bildschirmarbeitsplatzes 9 erfasst jede Eingabe des Benutzers, also des Mechanikers, und wertet diese Eingabe aus. Signale mit den ausgewerteten Benutzer-Eingaben werden an den Regler 11 übermittelt.

In einer Ausgestaltung berechnet die Bildauswerteeinheit 14 für jedes Befestigungselement und jedes Verbindungselement jeweils ein Sicherheitsmaß für die automatisch gefällte Gut-oder-Schlecht-Entscheidung. Auf dem Bildschirmgerät 10 wird jedes Befestigungselement und jedes Verbindungselement dargestellt, welches die Bildauswerteeinheit 14 in den Abbildern erkannt hat. Die Befestigungselemente und Verbindungselemente mit einem geringen Sicherheitsmaß und die Befestigungselemente und Verbindungselemente, für welche die Bildauswerteeinheit 14 eine Schlecht-Entscheidung gefällt hat, werden hervorgehoben dargestellt. Der Bearbeiter markiert ein dargestelltes Element oder wählt das dargestellte Element auf andere Weise aus und gibt seine Entscheidung betreffend dieses Element ein. Die Entscheidung des Bearbeiters überschreibt eine automatisch gefällte Entscheidung der Bildauswerteeinheit 14.

In einer anderen Ausgestaltung wird das Fahrzeug-Abbild nur dann auf dem Bildschirmgerät 10 dargestellt, wenn die Bildauswerteeinheit 14 eine Schlecht-Entscheidung gefällt hat oder für eine Entscheidung ein geringes Sicherheitsmaß berechnet hat. Ein Bearbeiter analysiert dieses mindestens eine Fahrzeug-Abbild mit der noch eingebauten alten Batterie 5a und trifft eine Gut-oder-Schlecht-Entscheidung für die gesamte Batterie 5a. Diese gesamte Entscheidung wird erfasst und ausgewertet.

In einer weiteren Ausgestaltung wird die Bildauswerteeinheit 14 eingespart. Jedes Fahrzeug-Abbild wird ohne eine vorherige automatische Auswertung an den Bildschirmarbeitsplatz 9 übermittelt und auf dem Bildschirmgerät 10 dargestellt.

Der Bildschirmarbeitsplatz 9 besitzt bevorzugt Betätigungselemente, mit denen der Mechaniker die Hubtisch-Kamera 4a, 4b betätigen kann und z. B. Betrachtungsrichtung, den gezeigten Bildausschnitt und den Blickwinkel verändern kann. Der Bearbeiter trifft eine Gut-oder-Schlecht-Entscheidung für die gesamte Batterie 5a.

In einer Ausgestaltung wird die Batterie automatisch ausgebaut, wenn für jedes Befestigungselement und jedes Verbindungselement eine Gut-Entscheidung gefällt wurde. Anschließend wird mindestens ein weiteres Fahrzeug-Abbild erzeugt, welches den Bereich des Fahrzeugs zeigt, an dem sich die Batterie vor dem Ausbau befand. Dieses mindestens eine weitere Fahrzeug-Abbild wird ausgewertet, um die Befestigungselemente und Verbindungselemente zu analysieren und erneut jeweils eine Gut-oder-Schlecht-Entscheidung zu treffen. Diese Entscheidung lässt sich bei ausgebauter Batterie mit größerer Sicherheit treffen, weil die Befestigungselemente und Verbindungselemente des Fahrzeugs besser zu sehen sind als bei eingebauter Batterie. Vorzugsweise wird nur dann eine neue Batterie eingebaut, wenn für jedes Verbindungselement und jedes Befestigungselement bei ausgebauter Batterie eine Gut-Entscheidung gefällt wurde.

In einer Ausgestaltung wird auch das weitere Fahrzeug-Abbild an einen Bildschirmarbeitsplatz 9 übermittelt und dort auf einem Bildschirmgerät 10 dargestellt, und jeweils eine Entscheidung eines Bearbeiters erfasst. Im Folgenden werden die nächsten Schritte beschrieben, die in dem Fall durchgeführt werden, dass die Bildauswerteeinheit 14 die Entscheidung gefällt hat, dass die alte Batterie 5a automatisch ausgebaut werden kann, oder der Bildschirmarbeitsplatz 9 eine derartige Entscheidung des Mechanikers erfasst hat.
- Die Bildauswerteeinheit 14 stellt fest, welche Befestigungselemente die alte Batterie 5a halten, und übermittelt ein entsprechendes Signal an den Regler 11.
- Für jedes Befestigungselement wird wiederholt eine Abfolge durchgeführt, um per Regelung ein Wechsel-Werkzeug in eine Position zu bringen, in der das Wechsel-Werkzeug dieses Befestigungselement lösen kann.

In einer Ausgestaltung besitzt der Hubtisch 2 mindestens einen Werkzeug-Stellantrieb, um ein Wechsel-Werkzeug relativ zum Hubtisch zu drehen und/oder linear zu bewegen. Der Regler 11 übermittelt Stellbefehle an diesen Werkzeug-Stellantrieb und erhält Rückmeldungen von diesem Werkzeug-Stellantrieb. Dadurch "weiß" der Regler 11 zu jedem Zeitpunkt, an welcher Relativ-Position relativ zum Hubtisch sich das Wechsel-Werkzeug befindet.

In dieser Ausgestaltung wird eine Abfolge durchgeführt, die folgende Schritte umfasst:
- Eine Hubtisch-Kamera 4a, 4b oder auch die Werkzeug-Kamera erzeugt ein Abbild von der alten Batterie 5a und dem Befestigungselement.
- Die Bildauswerteeinheit 14 wertet das Abbild aus und ermittelt die Ist-Position des Befestigungselement-Abbilds im Abbild der Batterie 5a.
- Falls sich im Batterie-Abbild kein Abbild des Befestigungselements befindet, so werden der Hubtisch 2 oder das Fahrzeug 6 bewegt, und anschließend wird ein weiteres Abbild von der alten Batterie 5a mitsamt dem Befestigungselement erzeugt.
- Nachdem die Bildauswerteeinheit 14 die Ist-Position des Befestigungselement-Abbilds im Batterie-Abbild ermittelt hat, übermittelt die Bildauswerteeinheit 14 entsprechende Signale, die diese Ist-Position beschreiben, an den Regler 11.
- Der Regler 11 wertet diese Signale sowie die Signale über die aktuelle Position des Wechsel-Werkzeugs aus und erzeugt Stellbefehle für den Werkzeug-Stellantrieb.
- Der Werkzeug-Stellantrieb bewegt das Wechsel-Werkzeug in eine Soll-Relativposition relativ zum Befestigungselement, so dass das Wechsel-Werkzeug das Befestigungselement greifen kann.

Vorzugsweise besitzt das Wechsel-Werkzeug einen Berührungssensor. Dieser Berührungssensor misst, ob das Wechsel-Werkzeug das Befestigungselement greifen konnte oder nicht. Der Berührungssensor erzeugt eine Rückmeldung an den Regler 11, und der Regler 11 wertet diese Rückmeldung aus, um bei Bedarf weitere Stellbefehle für den Werkzeug-Stellantrieb zu erzeugen.

Bei einer Fehlermeldung vom Sensor des Wechsel-Werkzeugs oder auch in jedem Falle wird ein weiteres Abbild von der alten Batterie 5a mit dem Befestigungselement erzeugt. Weil das Wechsel-Werkzeug sich nunmehr in der Nähe des Befestigungselements befindet, zeigt das Fahrzeug-Abbild zusätzlich das Wechsel-Werkzeug. Die Bildauswerteeinheit 14 wertet dieses Abbild aus und sucht nach Abbildern vom Wechsel-Werkzeug und vom Befestigungselement. Die Bildauswerteeinheit 14 erzeugt Signale mit der Ist-Position des Wechsel-Werkzeugs im Abbild im Batterie-Abbild. Der Regler 11 wertet diese Signale aus und erzeugt bei Bedarf weitere Stellbefehle für den Werkzeug-Stellantrieb.

Vorzugsweise erzeugt zu jedem Aufnahme-Zeitpunkt jede Hubtisch-Kamera 4a, 4b jeweils eine Aufnahme in einer Betrachtungsrichtung senkrecht oder schräg nach oben. Dies gilt für die Hubtisch-Kameras und evtl. für eine ortsfest montierte Kamera 7. Die Bildauswerteeinheit 14 wertet diese mehreren, gleichzeitig erzeugten Aufnahmen aus.

In einer Ausgestaltung ist die oder jede Hubtisch-Kamera 4a, 4b fest mit dem Hubtisch 2 verbunden. In einer Abwandlung besitzt der Hubtisch 2 zusätzlich mindestens einen Kamera-Stellantrieb. Der Regler 11 steuert zusätzlich diesen Kamera-Stellantrieb an, um die Kamera 4a, 4b in eine andere Position relativ zum Hubtisch 2 und damit auch relativ zum Befestigungselement zu bringen. Diese Positionsveränderung wird dann durchgeführt, wenn die Bildauswerteeinheit 14 in einem Abbild der Batterie kein Haltelement-Abbild entdeckt hat, z. B. weil das Wechsel-Werkzeug das Befestigungselement - gesehen in die vorige Betrachtungsrichtung - verdeckt.

In einer Ausgestaltung werden die Fahrzeug-Abbilder von dem Hubtisch-Kameras 4a, 4b wiederum an den Bildschirmarbeitsplatz 9 übermittelt und auf dem Bildschirmgerät 10 dargestellt. Der Mechaniker überwacht das Auswechseln der Batterie 5a. Vorzugsweise hat der Bildschirmarbeitsplatz 9 ein Not-Aus-Betätigungselement, mit dem der Mechaniker den Hubtisch 2 mit den Wechsel-Werkzeugen stoppen kann.

Die Wechsel-Werkzeuge lösen nacheinander die Befestigungselements. Während diese Schritte durchgeführt werden, steht vorzugsweise die alte Batterie 5a auf der Auflagefläche 13 des Hubtischs 2.

Die Bildauswerteeinheit 14 hat in dem oder den Abbildern von der Batterie 5a die Position jedes Befestigungselements ermittelt und entsprechende Signale an den Regler 11 übermittelt. Der Regler "weiß" daher, wie viele Befestigungselemente insgesamt zu lösen sind. Nachdem ein Wechsel-Werkzeug ein Befestigungselement gelöst hat, sendet das Wechsel-Werkzeug vorzugsweise eine Rückmeldung an den Regler 11. Der Regler 11 wertet diese Rückmeldung aus und prüft, ob nunmehr alle Befestigungselemente gelöst worden sind oder ob jetzt noch ein weiteres Befestigungselement zu lösen ist. Sobald alle Befestigungselemente gelöst worden sind, sendet der Regler 11 ein entsprechendes Signal an den Hubtisch 2. Der Hubtisch 2 senkt die gelöste alte Batterie 5a ab und entfernt sie dadurch aus dem Fahrzeug 6. Der Hubtisch 2 senkt die alte Batterie 5a bis zur Fördereinrichtung 8 ab. Ein Förderband des Hubtisches 2 oder auch ein Handhabungsautomat verschiebt die alte Batterie 5a auf die Fördereinrichtung 8. Die Fördereinrichtung 8 transportiert die alte Batterie 5a ab.

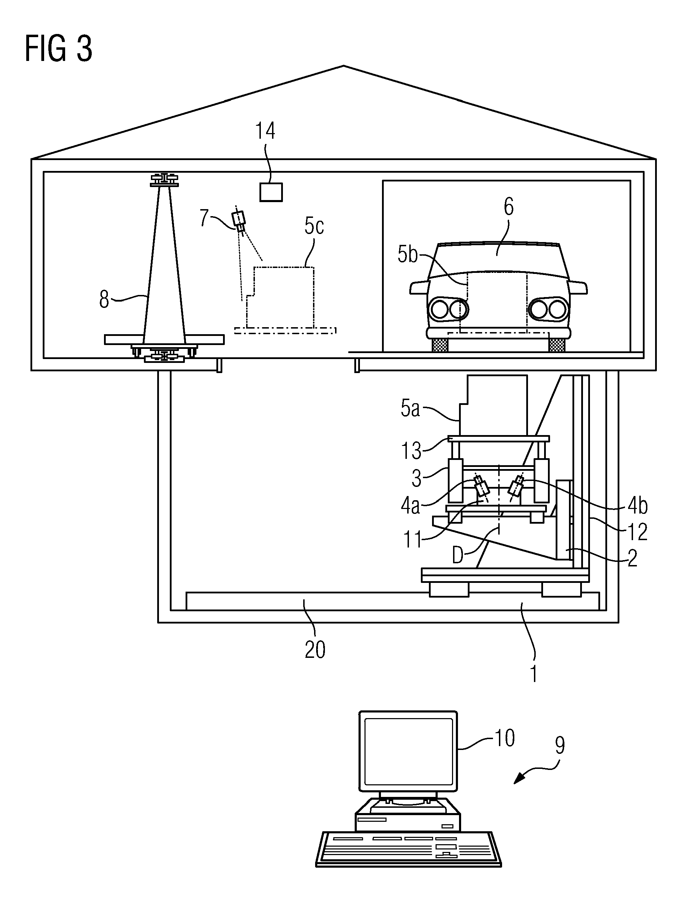

Fig. 3 zeigt die Situation, dass der Hubtisch 2 die alte Batterie 5a abgesenkt hat. Zu sehen ist der freie Platz 5b im Fahrzeug 6.

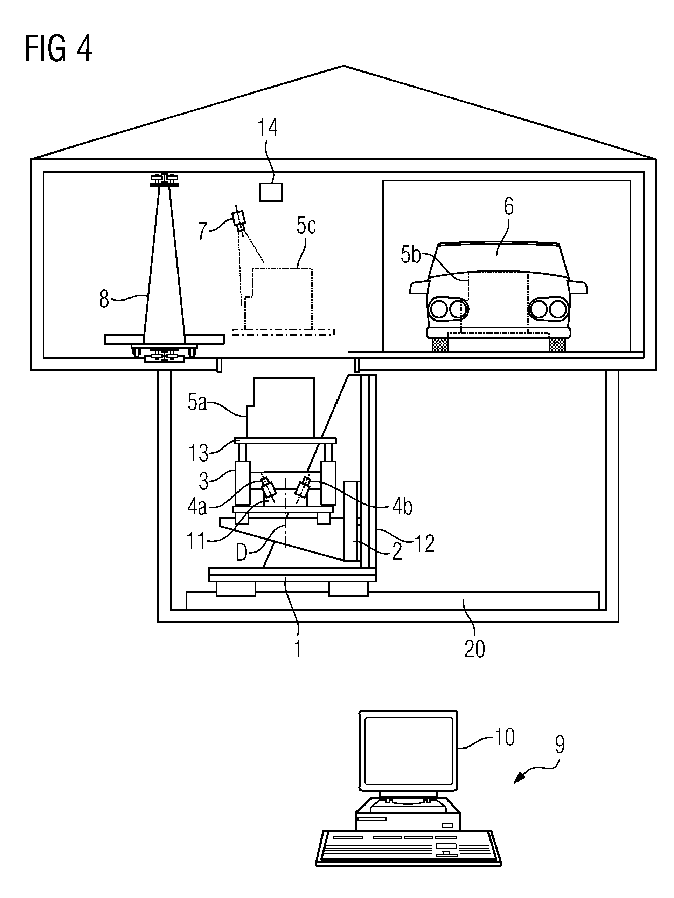

Fig. 4 zeigt die Situation, dass der abgesenkte Hubtisch 2 seitlich wegbewegt wurde. Die Haltevorrichtung 1 mit dem Hubtisch 2 wird auf einer Führungseinrichtung 20 seitlich bewegt.

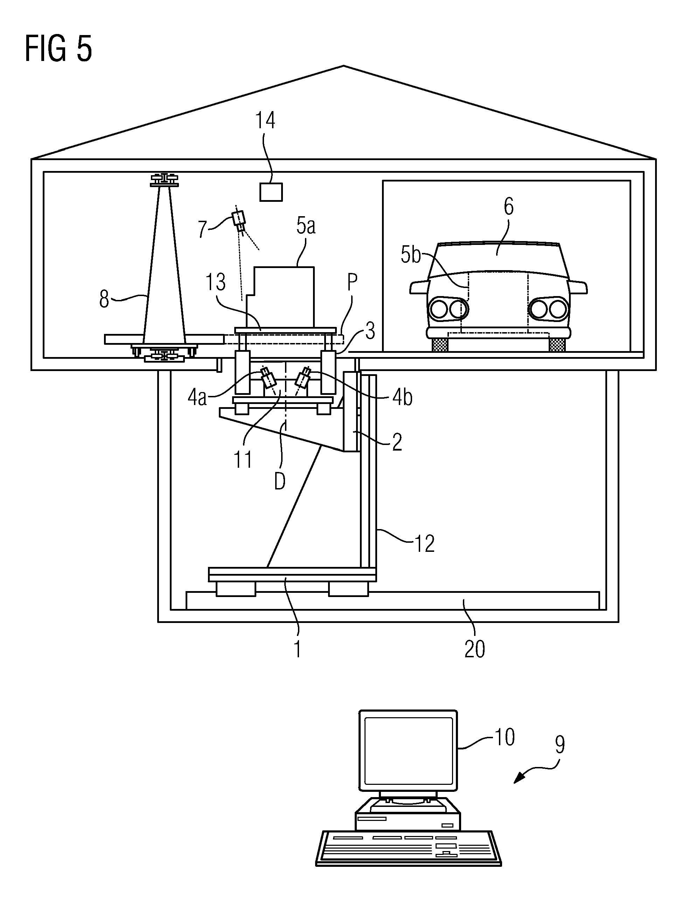

Fig. 5 zeigt die Situation, dass der Hubtisch 2 die alte Batterie 5a angehoben hat. Die Fördereinrichtung 8 vermag nunmehr die alte Batterie 5a zu einer Aufladestation abzutransportieren.

In einer Ausgestaltung erzeugen die Kameras 4a, 4b, 7 jeweils einzelne Abbilder vom Fahrzeug 6 oder von der Batterie 5a. In einer bevorzugten Ausgestaltung ist wenigstens eine Kamera als Videokamera ausgestaltet, welche permanent Abbilder erzeugt. Diese Folge von Abbildern wird an den Bildschirmarbeitsplatz 9 übermittelt. Auf dem Bildschirmgerät 10 wird eine Abfolge von Abbildern dargestellt. Vorzugsweise ist der zeitliche Abstand zwischen zwei aufeinander folgenden Aufnahmen so gering, dass ein Mechaniker auf dem Bildschirmgerät 10 einen Film ohne Ruckeln sieht.

Die mindestens eine Videokamera ist vorzugsweise mit einem Kamera-Stellantrieb sowie mit einem Zoom ausgestaltet. Der Mechaniker kann über Betätigungselemente diesen Stellantrieb und diesen Zoom ansteuern. Dadurch kann der Mechaniker die Betrachtungsrichtung, den Bildausschnitt und den Betrachtungswinkel der Videokamera ändern und damit den Ausbau der alten und den Einbau der neuen Batterie laufend überwachen, und zwar praktisch ohne Zeitverzug. Diese Betätigungselemente stehen dem Mechaniker auch schon zur Verfügung, um die noch eingebaute Batterie näher zu überprüfen, z. B. um eine Kamera 4a, 4b relativ zum Hubtisch zu bewegen und dadurch den Bildausschnitt und den Bildwinkel oder die Betrachtungsrichtung zu ändern. Zwischen einem realen Ereignis in der Batteriewechselstation und der Darstellung dieses Ereignisses auf dem Bildschirmgerät 10 verstreicht nur die kurze Zeitspanne, die für die Datenübertragung und die Bilddarstellung erforderlich ist.

In der bislang dargestellten Ausführungsform steuert der Regler 11 in Zusammenwirken mit der Bildauswerteeinheit 14 automatisch die Stellantriebe für die Auflagefläche 13, 12 für den Hubtisch 2 und ggf. die Stellantriebe für die Wechsel-Werkzeuge an. In einer abweichenden Ausführungsform umfasst der Bildschirmarbeitsplatz 9 mehrere Betätigungselemente, um die Stellantriebe 3, 12 für den Hubtisch und für die Wechsel-Werkzeuge anzusteuern. Ein Mechaniker am Bildschirmarbeitsplatz 9 kann jederzeit die Steuerung eines Stellantriebs 3, 12 übernehmen und selber Stellbefehle an diesen Stellantrieb 3, 12 erzeugen. Beispielsweise betätigt der Mechaniker einen "Joy Stick" oder einen Knüppel oder ein Steuerrad.

In einer Ausgestaltung wird der Hubtisch 2 mit den Kameras 4a, 4b erneut angehoben, nachdem die alte Batterie 5a ausgebaut und abgesenkt worden ist. Mindestens eine Kamera 4a, 4b erzeugt mindestens ein Abbild von den mechanischen Befestigungselementen und den elektrischen Verbindungselementen. In diesem Abbild sind die Befestigungselemente und Verbindungselemente besser zu erkennen als in einem Abbild mit der alten Batterie 5a, weil nunmehr keine Batterie die Befestigungselemente und Verbindungselemente verdeckt.

Die Bildauswerteeinheit 14 überprüft durch Auswertung des mindestens einen Abbilds, ob alle Befestigungselemente und Verbindungselemente des Fahrzeugs 6 intakt sind oder ob ein Befestigungselement oder Verbindungselement z. B. mechanisch beschädigt, verschmutzt oder korrodiert ist. Die Bildauswerteeinheit 14 trifft eine entsprechende Entscheidung. Wiederum berechnet die Bildauswerteeinheit 14 vorzugsweise zusätzlich ein Sicherheitsmaß. Falls die Bildauswerteeinheit 14 die Entscheidung trifft, dass ein Befestigungselement oder Verbindungselement defekt oder verschmutzt ist oder falls das berechnete Sicherheitsmaß unter einer vorgegebenen Schranke bleibt, so wird das mindestens eine Abbild wiederum an einen Bildschirmarbeitsplatz 9 übermittelt und auf dem Bildschirmgerät 10 dargestellt. Ein Mechaniker trifft eine Entscheidung darüber, ob Reparaturen oder Reinigungsarbeiten am Fahrzeug 6 erforderlich sind, und wenn ja, welche. Der Mechaniker entscheidet bei Bedarf, welche Reparaturschritte auszuführen sind. Hierfür analysiert der Mechaniker das dargestellte Abbild.

Vorzugsweise übermittelt wiederum mindestens eine Videokamera permanent Abbilder von dem Fahrzeug 6 ohne Batterie 5a an den Bildschirmarbeitsplatz 9, und auf dem Bildschirmgerät 10 wird eine Sequenz dargestellt, die dem Mechaniker als Film erscheint. Der Mechaniker kann die Betrachtungsrichtung, den Bildausschnitt und/oder den Blickwinkel mittels geeigneter Betätigungselemente ändern.

Falls alle Verbindungselemente und Befestigungselemente intakt sind, so wird eine neue Batterie in das Fahrzeug 6 eingebaut. Hierfür wird eine neue Batterie auf die Fördereinrichtung 8 verbracht oder auf andere Weise temporär mit der Fördereinrichtung 8 verbunden. Die Fördereinrichtung 8 transportiert die neue Batterie zum Hubtisch 2. Die neue Batterie wird auf den Hubtisch 2 verbracht. Der Hubtisch 2 mit der neuen Batterie wird angehoben. Der Hubtisch 2 positioniert die Batterie in die richtige Position bezüglich der Befestigungselemente und Verbindungselemente. Hierbei werden wiederum Abbilder aufgenommen und ausgewertet, und die Position des Hubtischs 2 wird durch Regelung gezielt verändert. Anschließend montieren die Wechsel-Werkzeuge die neue Batterie an den Befestigungselementen im Fahrzeug 6 fest. Wiederum werden Abbilder erzeugt und ausgewertet, und die Relativpositionen von Wechsel-Werkzeugen relativ zum Hubtisch 2 werden durch gezielte Regelung verändert. Nachdem die neue Batterie eingebaut ist, wird das Verschlusselement verschlossen. Dadurch ist der Austausch der Batterie abgeschlossen. Der Hubtisch 2 wird wieder abgesenkt, und das Fahrzeug 6 wird weggefahren.

Die alte Batterie 5a wird zu einem Prüfplatz mit einer weiteren Kamera transportiert. In einer Ausgestaltung gehört die ortsfeste Kamera 7 zu diesem Batterie-Prüfplatz. In einer Ausgestaltung wird zunächst mindestens ein Abbild von der ausgebauten alten Batterie 5a erzeugt. Dieses Batterie-Abbild zeigt die Befestigungselemente und Verbindungselemente der alten Batterie 5a. Weil das Abbild die ausgebaute alte Batterie 5a zeigt, sind die Befestigungselemente und Verbindungselemente besser zu erkennen als bei einer eingebauten Batterie.

Die Bildauswerteeinheit 14 wertet das mindestens eine Abbild der alten, ausgebauten Batterie 5a aus und versucht zunächst automatisch zu entscheiden, ob sich die alte Batterie 5a ohne zusätzliche Schritte wieder aufladen und einbauen lässt. Hierfür wertet die Bildauswerteeinheit 14 die Abbilder der Befestigungselemente und Verbindungselemente im Batterie-Abbild aus und ermittelt den jeweiligen aktuellen Zustand des Elements. Insbesondere sucht die Bildauswerteeinheit 14 nach Anzeichen für mechanische Beschädigungen, Verschmutzungen und Korrosionsspuren. Vorzugsweise berechnet die Bildauswerteeinheit 14 wiederum ein Sicherheitsmaß für diese Entscheidung.

Falls die Bildauswerteeinheit 14 entscheidet, dass ein elektrisches Verbindungselement defekt oder korrodiert oder verschmutzt ist, oder falls das Sicherheitsmaß unter einer vorgegebenen Schranke liegt, so wird das Abbild wieder an den Bildschirmarbeitsplatz 9 übermittelt und auf dem Bildschirmgerät 10 dargestellt. Ein Mechaniker analysiert das Abbild genauer und trifft eine Entscheidung, was mit der alten Batterie 5a geschehen soll.

In einer Ausgestaltung wird mindestens ein Batterie-Abbild von der ausgebauten Batterie 5a erzeugt. Für jedes Befestigungselement und jedes Verbindungselement der ausgebauten Batterie wird eine Gut-oder-Schlecht-Entscheidung getroffen. Diese Entscheidung trifft wiederum entweder eine Bildauswerteeinheit 14 automatisch. Oder das Batterie-Abbild wird auf dem Bildschirmgerät des Bildschirmarbeitsplatzes 9 dargestellt, und mindestens eine Eingabe eines Mechanikers wird erfasst. Nur dann, wenn für jedes Befestigungselement und Verbindungselement eine Gut-Entscheidung gefällt wurde, wird die ausgebaute Batterie 5a aufgeladen. Dadurch wird vermieden, dass eine verschmutzte, korrodierte oder mechanisch beschädigte Batterie überflüssigerweise in eine Aufladestation transportiert wird und dort vergeblich versucht wird, die Batterie aufzuladen, wodurch die Aufladestation überflüssigerweise blockiert wird.

Beispielsweise trifft der Mechaniker eine Entscheidung zwischen folgenden Alternativen:
- Die alte Batterie 5a lässt sich ohne zusätzliche Schritte wieder aufladen und einbauen.
- Die alte Batterie 5a muss manuell vor Ort untersucht werden.
- Die alte Batterie 5a ist zu reinigen.
- Die alte Batterie 5a ist zu reparieren.
- Die alte Batterie 5a muss entsorgt werden.

Ansonsten, also bei ausschließlich intakten Verbindungselementen, wird die alte Batterie 5a zu der Aufladestation transportiert und dort aufgeladen.

Der Mechaniker am Bildschirmarbeitsplatz 9 wird dadurch in die Lage versetzt, sowohl eine noch eingebaute alte Batterie 5a als auch die ausgebaute alte Batterie 5a gründlich aus der Ferne zu untersuchen, bevor er eine Entscheidung trifft, ob eine neue Batterie sich automatisch oder manuell einbauen lässt und sich die alte Batterie 5a wiederverwenden lässt.

### Bezugszeichenliste

| *Bezugszeichen* | *Bedeutung* |
|---|---|
| 1 | Haltevorrichtung für den Hubtisch 2 |
| 2 | Hubtisch |
| 3 | Stellantrieb für die Auflagefläche 13 |
| 4a, 4b | Kameras am Hubtisch 2 |
| 5a | Batterie |
| 5b | Platz im Fahrzeug 6, in dem die Batterie 5a eingebaut werden soll |
| 6 | Fahrzeug |
| 7 | zusätzliche, ortsfest angebrachte Kamera für Abbilder aus einer anderen Betrachtungsrichtung als die Kameras 4a, 4b |
| 8 | Fördereinrichtung für Batterien |
| 9 | Bildschirmarbeitsplatz |
| 10 | Bildschirmgerät des Bildschirmarbeitsplatzes 9 |
| 11 | Regler zum Ansteuern der Stellantriebe 3, 12 |
| 12 | Stellantrieb für den Hubtisch 2 |
| 13 | Aufladefläche des Hubtisches 2 |
| 14 | Bildauswerteeinheit |
| 20 | Führungsschiene für die Haltevorrichtung 1 |

## Patentansprüche

1. Verfahren zum Ausbauen einer Batterie (5a) aus einem Fahrzeug (6),
wobei die Batterie (5a) mechanisch mittels mindestens eines Befestigungselements und elektrisch mittels mindestens eines Verbindungselements mit dem Fahrzeug (6) verbunden ist und
das Verfahren die Schritte umfasst, dass
- das Fahrzeug (6) in eine Relativposition zu einem unterhalb des Fahrzeugs (6) befindlichen Hubtisch (2) gebracht wird,
- der Hubtisch (2) angehoben wird,
- mindestens ein mit dem Hubtisch (2) verbundenes Bildaufnahmegerät (4a, 4b) mindestens ein Fahrzeug-Abbild erzeugt,
- wobei das mindestens ein Fahrzeug-Abbild die Batterie (5a) im Fahrzeug (6) vor dem Ausbau zeigt, und
- durch Auswertung des mindestens einen Fahrzeug-Abbilds für jedes Befestigungselement und jedes Verbindungselement jeweils eine Gut-oder-Schlecht-Entscheidung über den aktuellen Zustand des Elements getroffen wird.

2. Verfahren nach Anspruch 1,
**dadurch gekennzeichnet, dass**
der Schritt, dass mindestens eine Fahrzeug-Abbild auszuwerten, die Schritte umfasst, dass
- das Abbild an eine Datenverarbeitungsanlage (9) mit einem Bildschirmgerät (10) übermittelt wird,
- das Bildschirmgerät (10) das Abbild darstellt und
- die Datenverarbeitungsanlage (9) mindestens eine Eingabe über den aktuellen Zustand eines dargestellten Verbindungselements oder Halteelements erfasst und auswertet.

3. Verfahren nach Anspruch 2,
**dadurch gekennzeichnet, dass**
die Datenverarbeitungsanlage (9) prüft, ob eine einzige Gut-Entscheidung für die Batterie (5a) mit allen Befestigungselementen und Verbindungselementen erfasst wurde,
und dann, wenn eine solche Gesamt-Gut-Entscheidung gefasst wurde,
diese eine Gesamt-Gut-Entscheidung als Gut-Entscheidung für jedes Befestigungselement und für jedes Verbindungselement verwendet wird.

4. Verfahren nach einem der Ansprüche 1 bis 3,
**dadurch gekennzeichnet, dass**
dann, wenn für jedes Befestigungselement und Verbindungselement eine Gut-Entscheidung getroffen wurde,
die zusätzliche Schritte durchgeführt werden, dass
- mindestens ein mit dem Hubtisch (2) mechanisch verbundenes Wechsel-Werkzeug jedes Befestigungselement löst und
- der Hubtisch (2) mitsamt der Batterie (5a) abgesenkt wird.

5. Verfahren nach Anspruch 4,
**dadurch gekennzeichnet, dass**
- nach dem Ausbau der Batterie (5a) mindestens ein weiteres Fahrzeug-Abbild erzeugt wird,
- das weitere Fahrzeug-Abbild einen Bereich des Fahrzeugs (6) zeigt, in dem sich die Batterie (5a) vor dem Ausbau befand,
- durch Auswertung des mindestens einen weiteren Fahrzeug-Abbilds erneut für jedes Halteelement und Verbindungselement eine Gut-oder-Schlecht-Entscheidung über den aktuellen Zustand des Elements getroffen wird, und
dann, wenn beim erneuten Entscheiden für jedes Befestigungselement und Verbindungselement eine Gut-Entscheidung getroffen wurde,
die zusätzliche Schritte durchgeführt werden, dass
- eine neue Batterie auf dem Hubtisch (2) verbracht wird,
- der Hubtisch (2) mitsamt der neuen Batterie angehoben wird und
- das mindestens eine Wechsel-Werkzeug die neue Batterie einbaut,
- wofür das Wechsel-Werkzeug jedes Befestigungselement befestigt.

6. Verfahren nach einem der Ansprüche 1 bis 5,
**dadurch gekennzeichnet, dass**
- mindestens ein Batterie-Abbild erzeugt wird,
- das Batterie-Abbild die Batterie (5a) nach dem Ausbau aus dem Fahrzeug (6) zeigt,
- durch Auswertung des mindestens einen Batterie-Abbilds eine Gut-oder-Schlecht-Entscheidung über den aktuellen Zustand der Batterie getroffen wird und

7. Vorrichtung zum Ausbauen einer Batterie (5a) aus einem Fahrzeug (6),
wobei die Batterie (5a) mechanisch mittels mindestens eines Befestigungselements und elektrisch mittels eines Verbindungselements mit dem Fahrzeug verbunden ist und die Batteriewechselvorrichtung (6)
- einen Hubtisch (2),
- mindestens einen Stellantrieb (3, 12) für den Hubtisch (2),
- mindestens ein mit dem Hubtisch (2) mechanisch verbundenes Wechsel-Werkzeug,
- einen Regler (11) zum Ansteuern des mindestens einen Stellantriebs und
- mindestens ein Bildaufnahmegerät (4a, 4b) umfasst und
die Vorrichtung zum Durchführen der Schritte ausgestaltet ist,
- das Fahrzeug (6) in eine Relativ-Position zu dem unterhalb des Fahrzeugs (6) befindlichen Hubtisches (2) zu bringen,
- den Hubtisch (2) anzuheben,
- mittels des Bildaufnahmegeräts (4a, 4b) mindestens ein Fahrzeug-Abbild dergestalt zu erzeugen, dass das Fahrzeug-Abbild die Batterie (5a) im Fahrzeug (6) vor dem Ausbau zeigt, und
- durch Auswertung des mindestens einen Fahrzeug-Abbilds für jedes Befestigungselement und jedes Verbindungselement eine Gut-oder-Schlecht-Entscheidung über den aktuellen Zustand des Elements zu treffen.

8. Vorrichtung nach Anspruch 7,
**dadurch gekennzeichnet, dass**
- die Batteriewechselvorrichtung zusätzlich einen Bildschirmarbeitsplatz (9) umfasst,
- der Bildschirmarbeitsplatz (9) eine Datenverarbeitungsanlage mit einem Bildschirmgerät (10) und mindestens einem Eingabegerät umfasst,
- die Datenverarbeitungsanlage mit dem mindestens einen Bildaufnahmegerät (4a, 4b) verbunden ist,
- die Datenverarbeitungsanlage dazu ausgestaltet ist, ein Fahrzeug-Abbild, das von dem Bildaufnahmegerät (4a, 4b) erzeugt wurde, auf dem Bildschirmgerät (10) darzustellen, und
- das Eingabegerät dazu ausgestaltet ist, mindestens eine Eingabe über den aktuellen Zustand eines dargestellten Verbindungselements oder Befestigungselements zu erfassen.
